(19) Europäisches Patentamt
European Patent Office
Office européen des brevets

(11) EP 0 564 879 B1

(12) **EUROPÄISCHE PATENTSCHRIFT**

(45) Veröffentlichungstag und Bekanntmachung des Hinweises auf die Patenterteilung:
**17.12.1997 Patentblatt 1997/51**

(51) Int Cl.6: **G01N 22/00**, G01N 22/04

(21) Anmeldenummer: **93104608.0**

(22) Anmeldetag: **20.03.1993**

(54) **Vorrichtung zur Bestimmung von Materialparametern durch Mikrowellenmessungen**

Device for determination of parameters of a material by microwave measurements

Dispositif pour détermination des paramètres d'un matériau par mesures micro-ondes

(84) Benannte Vertragsstaaten:
**DE FR GB NL**

(30) Priorität: **04.04.1992 DE 4211362**

(43) Veröffentlichungstag der Anmeldung:
**13.10.1993 Patentblatt 1993/41**

(73) Patentinhaber: **LABORATORIUM PROF. DR. RUDOLF BERTHOLD GmbH & Co. KG 75323 Bad Wildbad (DE)**

(72) Erfinder:
• **Kassen, Rüdiger, Dipl.-Ing. W-7547 Bad Wildbad (DE)**
• **Klein, Albert, Dr. Ing. W-7540 Nevenbürg (DE)**
• **Weber, Jean Marie F-68130 Altkirch-St. Quentin (FR)**

(74) Vertreter: **Frank, Gerhard, Dipl.-Phys. et al Patentanwälte Mayer, Frank, Reinhardt, Schwarzwaldstrasse 1A 75173 Pforzheim (DE)**

(56) Entgegenhaltungen:
**EP-A- 0 011 185     EP-A- 0 372 843
DE-A- 3 412 704**

## Beschreibung

Die Erfindung betrifft eine Vorrichtung nach dem Oberbegriff des Patentanspruchs 1.

Mikrowellen-Transmissions- oder Reflexionsmessungen sind eine bekannte Methode, um Materialparameter, beispielsweise den Wassergehalt, einer bestimmten Probe durch Wechselwirkung der Welle mit dieser Probe zu bestimmen. Hierbei werden die frequenzabhängigen Änderungen in der Dämpfung und der Phase der Mikrowelle in Abhängigkeit von dem zu bestimmenden Materialparameter der Probe ausgewertet.

Eine bekannte Möglichkeit besteht dabei darin, bei einem strömenden Medium als Probe dieses durch einen Rohrleitungsabschnitt strömen zu lassen, an dem mittels einer Hohlleiteranordnung eine Mikrowellentransmissionsmessung durchgeführt wird (DE-A-34 12 704, EP-A-0 011 185).

Eine Meßanordnung wie die in der EP-A-0 011 185 beschriebene, führt jedoch zu unbefriedigender Meßgenauigkeit und Meßempfindlichkeit. Dies hat insbesondere die Ursache, daß in dieser konstruktiven Anordnung die beiden Öffnungen in den Hohlleiterwandungen mit der durchgeführten Rohrleitung, die schaltungstechnisch als eine Kapazität C darstellbar sind, zu Störungen der einfallenden Mikrowelle infolge von Resonanzeffekten führen.

Aufgabe der Erfindung ist es, eine Mikrowellen-Vorrichtung der gattungsgemäßen Art so weiterzubilden, daß Meßgenauigkeit und Meßempfindlichkeit verbessert werden.

Erfindungsgemäß wird diese Aufgabe durch den kennzeichnenden Teil des Patentanspruchs 1 gelöst.

Ein erster Grundgedanke besteht in der Anpassung der Abnahme des Durchmessers der Rohrleitung an die Abnahme der elektrischen Feldstärke zu den Rändern des Hohlleiters hin. Ein weiterer Grundgedanke ist darin zu sehen, daß die unerwünschten Resonanzeffekte durch Bauelemente beseitigt oder zumindest minimiert werden können, deren Induktivität L ein "Gegengewicht" zur Kapazität C der Hohlleiterdurchbrüche mit der Rohrleitung bildet. Beide Maßnahmen verbessern das Meßverhalten des Hohlleiter-Transmissionssystems.

Weitere vorteilhafte Ausgestaltungen der erfindungsgemäßen Vorrichtung sind den Unteransprüchen entnehmbar; ein bevorzugtes Ausführungsbeispiel der erfindungsgemäßen Vorrichtung und die damit im einzelnen erzielbaren Vorteile werden nun anhand von Zeichnungen näher erläutert, es zeigen:

Figur 1A...D: Schematische Darstellungen zur Verdeutlichung des Arbeitsprinzipis der erfindungsgemäßen Vorrichtung,

Figur 2: einen Längsschnitt in der Ebene M-M' der Figur 2 durch ein Ausführungsbeispiel eines Hohlleiters,

Figur 3: eine Aufsicht auf den Hohlleiter gemäß Figur 2,

Figur 4: eine teilweise aufgebrochene Seitenansicht einer praktischen Anwendung des Hohlleiters der Figuren 2 und 3 bei einer Rohrleitung,

Figur 5: einen Vertikalschnitt eines weiteren Ausführungsbeispiels eines Hohlleiters mit integriertem Rohrleitungsabschnitt,

Figur 6: einen Horizontalschnitt in der Ebene V-V der Figur 5,

Figuren 7 und 8: schematische Darstellung von Meßergebnissen.

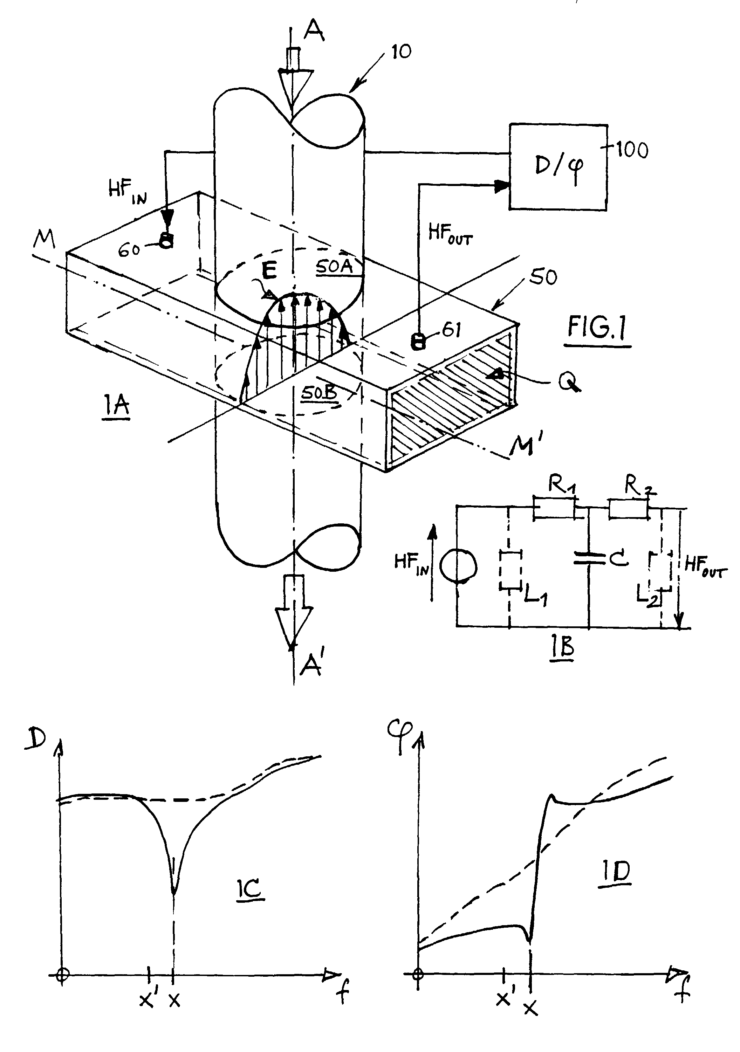

Figur 1A zeigt das grundsätzliche Meßprinzip: Ein in einer Rohrleitung 10 (in der Zeichnung von oben nach unten) strömendes Medium soll hinsichtlich seines Wassergehaltes bestimmt werden. Hierzu dient ein Hohlleiter 50 mit rechteckigem Querschnitt Q, der an seiner Ober- und Unterseite jeweils eine Öffnung 50A, 50B aufweist, die von der Rohrleitung 10 durchstoßen wird. Beidseitig der Rohrleitung 10 werden an schematisch dargestellten Anschlüsse 60,61 Mikrowellen ein- und ausgekoppelt, derart, daß diese Mikrowellen zwangsläufig die Rohrleitung und damit das auszumessende, darin strömende Medium durchsetzen und somit die meßbaren Eigenschaften der Mikrowelle (Dämpfung und/oder Phase) in auswertbarer Weise beeinflussen.

Die Rohrleitung 10 ist zu diesem Zweck aus nicht leitendem, dielektrischem Material. Die Längsachse A-A' der Rohrleitung 10 steht hierbei senkrecht auf der Längsachse M-M' des Hohlleiters 50 derart, daß das in Figur 1A schematisch dargestellte elektrische Feld E der magnetischen $H_{10}$-Welle parallel zur Achse A-A' der Rohrleitung 10 verläuft, wie dies durch die parallel angeordneten Pfeile in Figur 1A angedeutet ist, deren Spitzen auf einer Sinus-Halbkurve entsprechend dem Feldverlauf des dort herrschenden elektrischen Feldes enden. Daraus ergibt sich, daß sich das Maximum der elektrischen Feldstärke dort befindet, wo die Welle den Durchmesser der Rohrleitung 10 durchlaufen muß, wo also folglich die größte Dämpfung D zu erwarten ist. Durch Vergleich des Sinus-Verlaufs der Feldstärke E mit der hierzu senkrechten Querschnitts-Kreisfläche der Rohrleitung ist leicht zu erkennen, daß dem Abfall der elektrischen Feldstärke E zu den Rändern des Hohlleiters 50 hin eine etwa vergleichbare Abnahme der Schicht des zu durchstrahlenden Mediums gegenübersteht, so daß hier eine zumindest näherungsweise Kompensation erfolgt, in dem Sinne, daß die "zur Verfügung stehende" Feldstärke etwa der zu erwartenden Dämpfung proportional verläuft. Dies wirkt sich vorteilhaft auf die Meßempfindlichkeit und die Meßgenauigkeit aus, und hieraus ergibt sich, daß die verwendete Rohrleitung 10 den Querschnitt Q des eingesetzten Hohlleiters 50 möglichst vollständig ausfüllen sollte, was sich bei in der Regel vorgegebenem Rohrdurchmesser durch die Wahl einer zu einem entsprechenden Querschnitt Q führenden Mikrowellen-Meßfrequenz erreichen läßt.

Mit dieser in Figur 1A schematisch dargestellten Meßanordnung lassen sich am Eingang 60 ($HF_{in}$) beispielsweise Mikrowellen einspeisen, die dann nach Durchstrahlung des Mediums am Ausgang 61 ($HF_{out}$) wieder ausgekoppelt werden und durch die Durchführung einer allgemein bekannten Messung in einer Auswerteeinheit 100, die im wesentlichen aus einer Messung der Dämpfung D und/oder der Phase Phi besteht, lassen sich die gewünschten Rückschlüsse auf den Wassergehalt des durch die Rohrleitung 10 strömenden Mediums ziehen.

Figur 1B zeigt ein einfaches Ersatzschaltbild der in Figur 1A perspektivisch dargestellten Prinzipanordnung, wobei von besonderem Interesse ist, daß die beiden Öffnungen 50A,50B in den gegenüberliegenden Seitenwandungen des Hohlleiters 50 mit der durchgeführten Rohrleitung 10 zu Störungen der einfallenden Mikrowelle führen, die im Ersatzschaltbild der Figur 1B näherungsweise durch eine zur Fehlanpassung führende Kapazität C repräsentiert sind.

Mißt man (Figur 1C,1D) mit einer Anordnung gemäß Figur 1A gemäß Ersatzschaltbild 1B Dämpfung D und Phase φ (zunächst leer, das heißt, ohne durchströmendes Medium), so ergibt sich der in den Figuren 1C/1D mit durchgezogener Linie angegebene Verlauf, d.h., es bildet sich bei der Resonanzfrequenz x ein scharfer Einbruch bei der Dämpfung bzw. ein entsprechend scharfer Sprung bei der Phase Phi (bei gefüllter Rohrleitung 10 verschiebt sich die Resonanzfrequenz entsprechend zu dem niedrigeren Wert x').

Da bei der Bestimmung der Materialeigenschaften des Materials der Betrag und der Phasenverlauf beispielsweise einer Transmissionsmessung in Abhängigkeit von der Frequenz ausgewertet wird (Auswerteeinheit 100), ist es daher besonders wichtig, daß bei derartigen Messungen ein möglichst glatter (im Idealfall ein linearer) Verlauf dieser beiden Meßwerte in Abhängigkeit von der Frequenz erreicht wird.

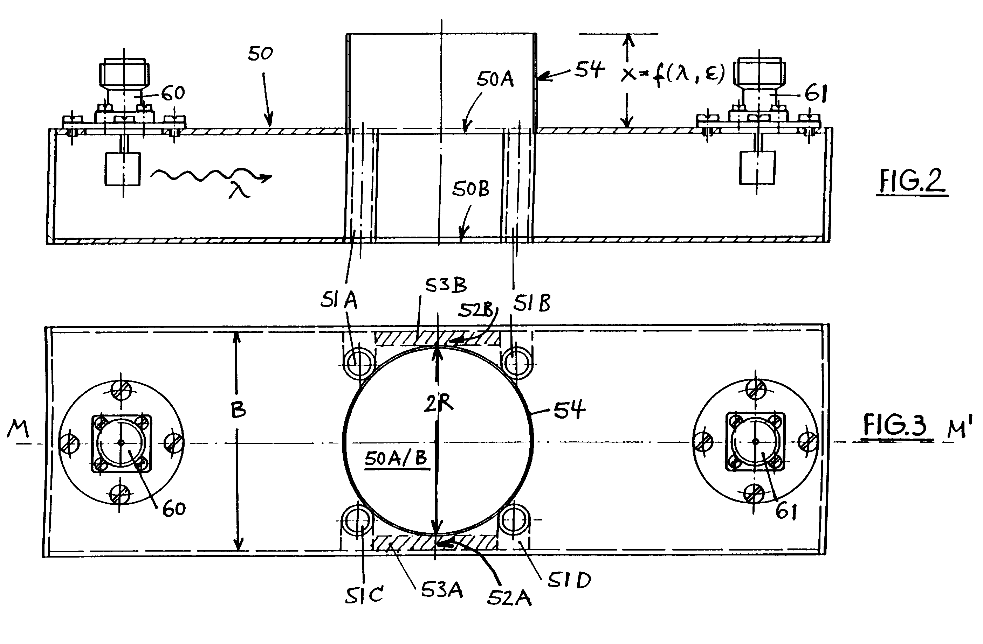

Mit der in Figur 1A schematisch skizzierten Meßanordnung sind bereits Messungen möglich, jedoch führen diese Resonanzerscheinungen aufgrund der Kapazität C zu quantitativ unbefriedigenden Meßergebnissen. Eine wesentliche Verbesserung läßt sich durch die im folgenden geschilderte Maßnahme erreichen, mit deren Hilfe der Funktionenverlauf in den Figuren 1C/1D die gestrichelte Kurve annimmt, d.h., mit deren Hilfe ein näherungsweise linearer oder zumindest glatter Verlauf dieser für die Auswertung wesentlichen Kurven erzielbar ist. Zur Erläuterung dieser (und weiterer) zusätzlicher Maßnahmen zur Erhöhung der Meßempfindlichkeit und zur Verbesserung der Meßgenauigkeit dienen die Figuren 2 bis 4:

Der Grundgedanke zur Verbesserung des Meßverhaltens besteht zunächst darin, den Einfluß der Kapazität C (Ersatzschaltbild 1B) durch Anordnung von Induktivitäten L1/L2 möglichst weitgehend zu kompensieren, die im Ersatzschaltbild 1B entsprechend der durch sie bewirkten Glättung der Funktionsverläufe in den Figuren 1C und 1D ebenfalls gestrichelt dargestellt sind.

Es hat sich herausgestellt, daß konstruktiv derartige Induktivitäten realisierbar sind, im Ausführungsbeispiel durch Verbindungsstege 51A...51D, die sowohl in der Nähe der Wandungen der Rohrleitung 10, als auch in der Nähe der zur Rohrleitung 10 parallelen Wandungen des Hohlleiters 50 angeordnet sind und sich von der Oberseite des Hohlleiters 50 bis zur Unterseite erstrecken. Der "induktive Effekt" derartiger Bauelemente ist in der Lage, den die Messung grundsätzlich verfälschenden Effekt der durch die Öffnungen 50A,50B geführten Rohrleitung 10 zumindest im wesentlichen zu kompensieren, so daß das durchströmende Medium sozusagen "pur" mit der Mikrowellen-Anordnung ausgemessen werden kann.

Zweckmäßigerweise sind hierbei die Verbindungsstege 51A...51D symmetrisch angeordnet, Formgebung und Anzahl dieser Stege sind in gewissen Grenzen wählbar und von der Dimensionierung des Hohlleiters im konkreten Anwendungsfall abhängig und im konkreten Einzelfall empirisch bestimmbar.

In der Aufsichtsdarstellung der Figur 3 ist erkennbar, daß im Gegensatz zum angestrebten Optimum der Durchmesser 2R der Öffnungen 50A/50B (entsprechend dem Außendurchmesser der Rohrleitung 10) geringfügig kleiner ist als die in der gleichen Richtung liegende lichte Breite B des Hohlleiters 50; dies kann darauf beruhen, daß bei vorgegebenem Durchmessser 2R die Mikrowellensende-Frequenz (beispielsweise aufgrund von gesetzlichen Bestimmungen) nicht genau so gewählt werden kann, daß die Idealbedingung B = 2R erfüllt ist. In diesem Fall ist es zweckmäßig, die beiden sich bildenden Spalte 52A/52B zwischen der Rohrwandung und den parallelen Seitenwandungen des Hohlleiters durch eine geeignete Absorberschicht 53A/53B abzudämpfen, um die dort auftretenden Feldkomponenten von der Messung auszuschließen, da diese im Endeffekt zur Messung eines Misch-Dielektrikums führen würden und somit die Meßempfindlichkeit beeinträchtigen würden.

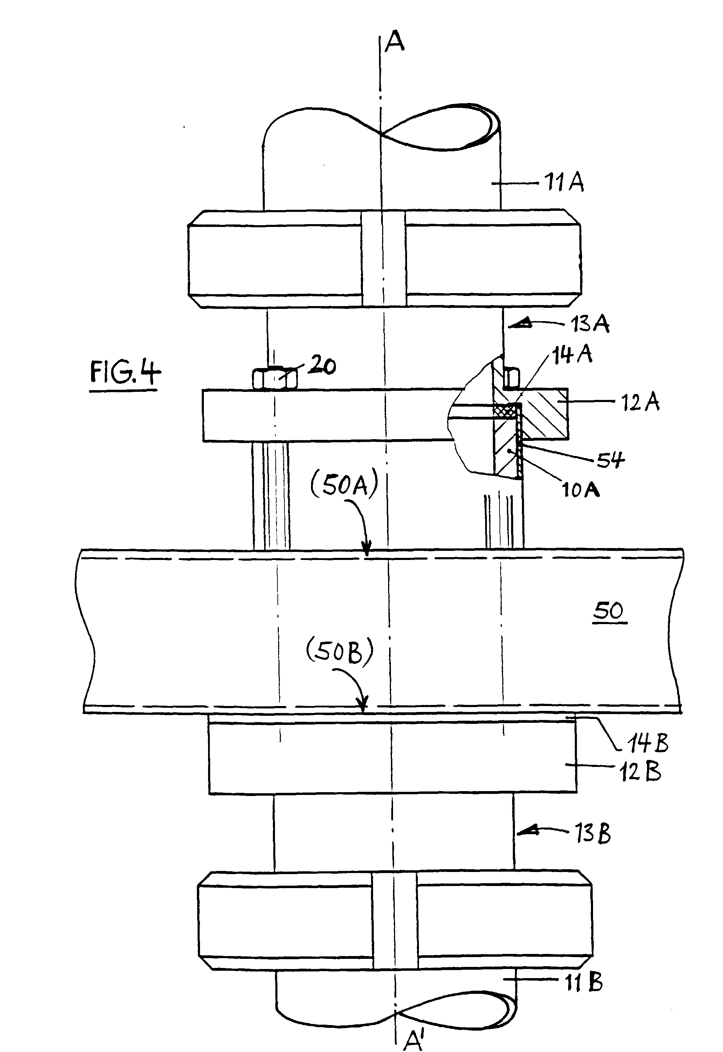

Eine Detaildarstellung der konstruktiven Ausgestaltung einer Durchführung einer Rohrleitung 10 durch einen Hohlleiter 50 zeigt Figur 4:

Das durch den Hohlleiter 50 führende Stück der Rohrleitung 10 wird gebildet von einem für elektromagnetische Wellen transparenten Teilstück 10A, wobei der Übergang von metallischen, üblicherweise verwendeten Anschlußleitungen 11A,11B zu diesem Teilstück 10A beispielsweise mittels in der Lebensmittelindustrie verwendeten ("Schaulaterne") Konstruktionen durchgeführt werden kann, bei denen ein Glas- oder Keramikrohr als Teilstück 10A mit Hilfe zweier Metallflansche 13A/13B in die metallischen Rohrleitungsabschnitte 11A,11B übergeführt werden kann. Hierfür sind insbesondere Flansche 12A,12B vorgesehen, in deren Innennut das Teilstück 10A aufsitzt, wobei Dichteinlagen 14A,14B eine Abdichtung gegen Wasser der Rohrleitung einerseits gegenüber dem Hohlleiter-Meßsystem andererseits zwischengelegt sind. Der untere, am Hohlleiter 50 anliegende Flansch 12B wird hierbei mit einer Dichtung 14B aus weichem Zinn abgedichtet, der obere Flansch 12A, der auf dem Teilstück 10A aufliegt, wird mit einer zusätzlichen Nut versehen und dort wird ein konventioneller Dichtring 14A eingelegt.

Die zum Verspannen der Flansche notwendigen Bolzen 20 werden durch Hülsen geführt, die durch den Hohlleiter 50 geführt sind, vorzugsweise durch die "Ersatzinduktivitäten", die Stege 51A...51D. An ihren Eintrittsstellen auf der Ober- und Unterseite des Hohlleiters sind diese Hülsen dicht geschweißt.

Ein weiteres Merkmal verbessert die Qualität der Mikrowellenmessung:

Koaxial zu den Öffnungen 50A,50B des Hohlleiters 50 ist ein zylindrischer, metallischer Aufsatz 54 aufgebracht, der die Wandung des Teilstückes 10A der Rohrleitung 10 eng anliegend umschließt. Dieser Rohraufsatz 54 erfüllt im wesentlichen zwei Aufgaben; er verhindert einerseits, daß elektromagnetische Wellen aus dem Hohlleiter 50 austreten und in die Umgebung abgestrahlt werden, außerdem wird verhindert, daß elektromagnetische Wellen in den Hohlleiter 50 eingekoppelt werden, die das Meßergebnis verfälschen könnten.

Dies kann darauf beruhen, daß über die metallische Wandung des Hohlleiters die Längsströme, die von der Mikrowelle im Hohlleiter induziert werden, auf die gegenüberliegende Seite zur Auskoppelstelle gelangen können. Dadurch wird erreicht, daß auch beim Durchgang der Mikrowelle durch das Meßmedium deren Charakter als Hohlleiterwelle, die in Richtung der Leitung geführt wird, erhalten bleibt. Dies trägt ebenso wie die oben beschriebenen "Ersatzinduktivitäten" zur Verbesserung des Übertragungsverhaltens der Mikrowellenanordnung bei. Die Längsströme, die über den zylindrischen Aufsatz 54 fließen, können in der Rohrleitung selbst ebenfalls eine Hohlleiterwelle vom Typ $H_{11}$ anregen, dies ist für die Messung jedoch von untergeordneter Bedeutung.

Die Anordnung solcher zylindrischer Aufsätze, wie des zylindrischen Aufsatzes 54, muß so erfolgen, daß störende Reflexionen am Übergang vom Teilstück 10A zu den Metallflanschen keine Rückwirkungen auf die Feldverteilung im Inneren des Hohlleiters haben. Grundsätzlich können nämlich die Feldkomponenten, die in das nicht- leitende Rohr eindringen, an den metallischen Flanschen reflektiert werden und wegen der geringen Dämpfung des nicht-leitenden Rohres muß dafür gesorgt werden, daß diese vom unteren und oberen Flansch reflektierten Feldkomponenten gegenphasig überlagert werden, so daß sie sich gegenseitig auslöschen und die Feldverteilung im Inneren des Hohlleiters nicht mehr beeinträchtigen.

Dies wird dadurch gewährleistet, daß die Länge x als Funktion von n und $\lambda_\varepsilon$ des zylindrischen Aufsatzes 54 nach der Gleichung

$$x = \frac{2\,n+1}{4}\,\lambda_\varepsilon, \; n = 0,\,1,\,2,\,....$$

gewählt ist, mit $\varepsilon$ = Dielektrizitätskonstante und $\lambda_\varepsilon$ = Mikrowellen-Wellenlänge. Diese "Auslöschbedingung" gewährleistet den angestrebten Effekt.

Grundsätzlich kann dies auch dadurch erreicht werden, daß auf den beiden gegenüberliegenden Öffnungen jeweils ein zylindrischer Aufsatz realisiert wird, die dann unterschiedliche Länge haben müssen. Die im Ausführungsbeispiel dargestellte Lösung mit einem einzigen, einseitig angeordneten zylindrischen Aufsatz 54 zeigt sich jedoch als die konstruktiv einfachste.

Zweckmäßigerweise sind hierbei die Länge des Teilstückes 10A und die Länge des zylindrischen Aufsatzes 54 so aufeinander abgestimmt, daß der Aufsatz 54 in der Ringnut des Flansches 12A das Teilstück 10A um die Dicke der Dichtungseinlage 14A überragt, so daß hierdurch eine gute Hochfrequenz-Abdichtung erreicht wird.

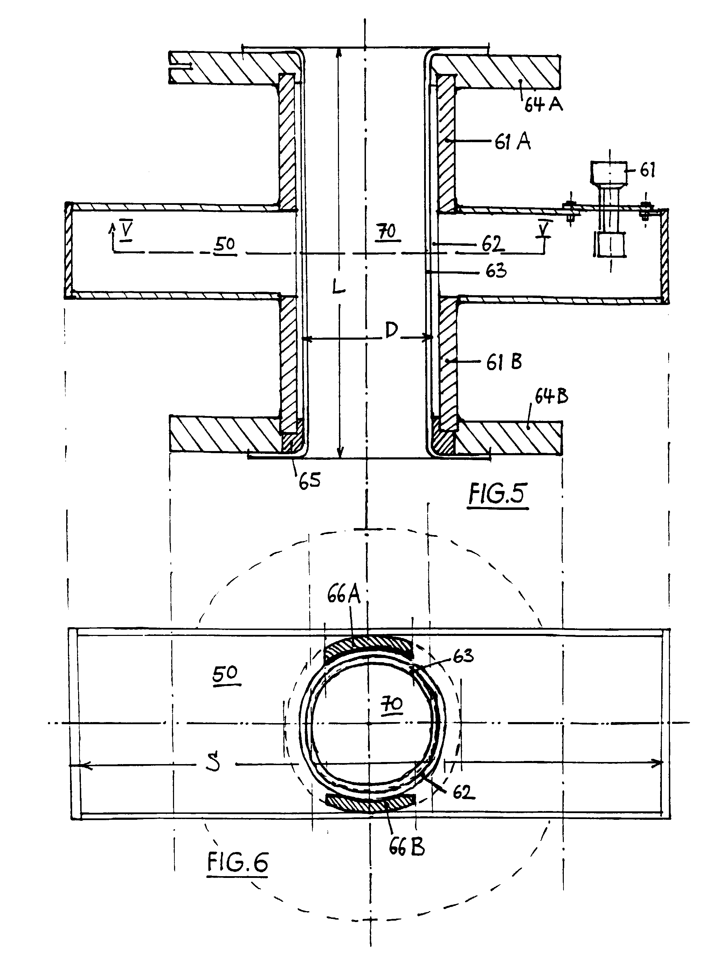

In den Figuren 5 und 6 ist ein zweites Ausführungsbeispiel eines Rohrleitungsabschnittes mit integriertem Hohlleiter dargestellt:

Der Rohrleitungsabschnitt 70 besteht in seinem äußeren Aufbau aus zwei stirnseitigen Flanschen 64A, 64B und zwei zylindrischen, metallischen Außenrohren 61A,61B, deren eines Ende in den Flanschen 64A,64B endet und deren inneres Ende in den gegenüberliegenden Öffnungen des Hohlleiters 50 festgesetzt ist, so daß die Längsebene des Hohlleiters 50 senkrecht zur Längsachse des Rohrleitungsabschnittes 70 zu liegen kommt.

Die Flansche 64A,64B übergreifen nach innen zu ein durchgehendes, inneres Keramikrohr 62. Die Innenfläche des Keramikrohrs 62 und die anschließenden Außenbereiche und Stirnbereiche der Flansche 64A,64B sind mit einem Schlauch 63 aus PTFE (Teflon) ausgekleidet, der zur Abdichtung der beschriebenen Struktur gegen das durchströmende, zu messende Medium dient.

Aus der Querschnittsdarstellung der Figur 6 ist zu entnehmen, daß der Außendurchmesser der metallischen Außenrohre 61A,61B der Breite des Hohlleiters 50 entspricht, so daß im Durchführungsbereich des Keramikrohres 62 durch den Hohlleiter 50 ein randseitiger Zwischenraum bzw. Spalt zwischen der Außenwandung des Keramikrohres 62 und der gegenüberliegenden Innenwandung des Hohlleiters 50 verbleibt.

Bei diesem Ausführungsbeispiel (vergl. hierzu auch die Querschnittsdarstellung der Figur 3) ist dieser Zwischenraum mit Bauteilen ausgefüllt, die als Induktivität wirken, die den Einfluß der von den beiden Öffnungen des Hohlleiters hervorgerufenen Kapazität kompensieren sollen, wie dies oben im einzelnen näher dargestellt ist.

Diese Bauelemente sind jedoch hier als metallische, schalenförmige Blendenelemente 66A,66B realisiert, die so dimensioniert sind, daß sie bei der sie durchlaufenden Mikrowelle unterschiedliche Phasenverschiebungen hervorrufen, beispielsweise kann dies durch eine unterschiedliche Querschnittsgestaltung der beiden Elemente 66A,66B erreicht werden, wie dies in Figur 6 dargestellt ist.

Der Sinn dieser Maßnahme ist folgender:

Bei einem Medium mit hoher Dämpfung gelangen in erheblichem Umfang Mikrowellen an der Rohrleitung 70 vorbei vom Sender 61 zum Empfänger. Diese Mikrowellen stellen damit eine unerwünschte Leckstrahlung dar. Mit der Anordnung der asymmetrisch im oben genannten Sinne ausgeführten Blendenelemente 66A, 66B läßt sich zumindest näherungsweise erreichen, daß der Wegunterschied zwischen beiden Teil-Mikrowellen etwa $\lambda/2$ beträgt, so daß sich bei der Überlagerung dieser beiden Mikrowellenkomponenten im Empfangsabschnitt des Hohlleiters 50 (dem linken Abschnitt in den Figuren 5 und 6) ein Auslöschungseffekt ergibt und sich somit diese unerwünschte Leckstrahlung zumindest weitgehend eliminieren läßt. Der nutzbare Dynamikbereich der Vorrichtung wird hierdurch wesentlich vergrößert, so daß auch ein Medium mit sehr hoher Dämpfung mit ausreichender Dynamik gemessen werden kann.

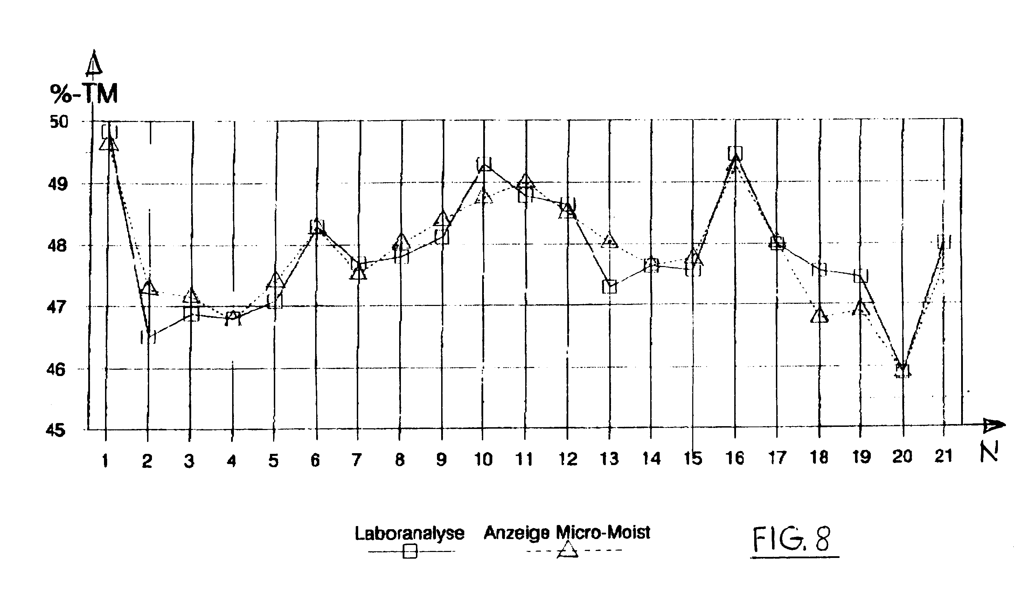

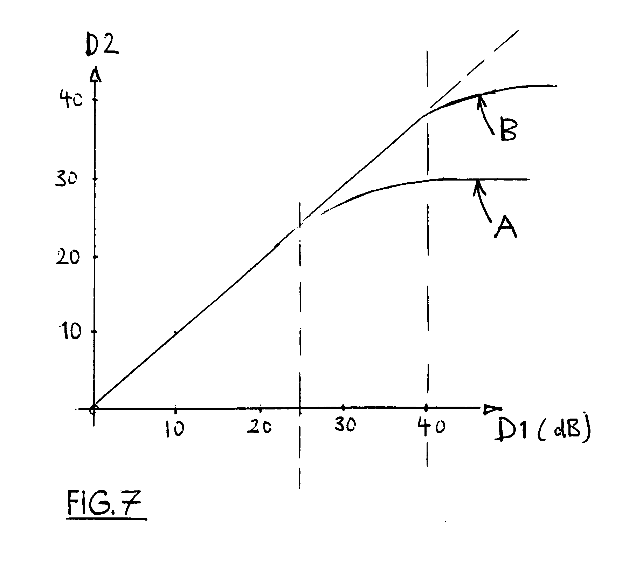

Figur 7 zeigt schematisch dieses verbesserte Verhalten der erfindungsgemäßen Vorrichtung:

Die dargestellten beiden Kurven A bzw. B zeigen die tatsächliche Dämpfung D1 eines Meßgutes und die von der Meßvorrichtung ermittelte und angezeigte Dämpfung D2. Eine genaue Messung bedeutet in dieser Darstellung, daß die Funktion D2 = F (D1) möglichst linear ist.

Mit symmetrischen Blendenelementen (vergl. Figur 3) war dies bei praktischen Versuchen mit einer Ausführungsform der Vorrichtung bis zu einer Dämpfung von ca. 25 dB der Fall (Kurve A).

Bei stärkerer Dämpfung, wie dies z.B. bei einem Meßgut mit hoher elektrolytischer Leitfähigkeit aufgrund eines erhöhten Salzgehalts auftreten kann, wird eine geringere Dämpfung D2 erreicht und angezeigt, als dies der tatsächlichen Dämpfung D1 des Meßgutes entspricht, wegen der oben erwähnten Leckstrahlung, die bei zunehmender Dämpfung des Meßgutes einen zunehmenden Einfluß auf das Gesamtmeßergebnis als Summe von transmittierter Strahlung und Leckstrahlung hat.

Beim Einsatz von asymmetrischen Blendenelementen 66A,66B (Figur 6) drängt der gegenseitige Auslöschungseffekt der beiden Komponenten der Leckstrahlung diesen Einfluß der Leckstrahlung im Verhältnis zur transmittierten Strahlung als "Nutzstrahlung" zurück, so daß im Ergebnis der Linearitätsbereich (Kurve B) erweitert werden konnte, mit anderen Worten, eine genaue Messung auch noch bei sehr hohen Dämpfungen im Bereich von etwa 40 dB durchgeführt werden konnte.

Bei dem erwähnten praktischen Ausführungsbeispiel der erfindungsgemäßen Vorrichtung betrug die Länge L des Rohrleitungsabschnittes 70 172mm, der Innendurchmesser D des Keramikrohres 62 44mm und die Länge S des Hohlleiters 50 256mm. Gemessen wurde in einem Mikrowellenfrequenzbereich von 2,7 bis 3,4 GHz, als Meßgut (Medium) wurde Frischkäse ausgemessen und dessen Trockenmassengehalt bestimmt. Als Auswerteeinheit 100 (Figur 1) diente ein Gerät der Anmelderin, das unter der Bezeichnung "Berthold Micro-Moist" im Handel erhältlich ist.

Die hierbei ermittelten Meßwerte sind in Figur 8 dargestellt: Hierbei bedeutet %-TM den Trockenmassengehalt in % des Frischkäses und N die Meßpunkte (21 Meßpunkte im Beispiel). Die dreieckig dargestellten Meßpunkte wurden mit der oben beschriebenen erfindungsgemäßen Vorrichtung ermittelt, die quadratisch dargestellten Meßpunkte stammen aus einer Laboranalyse zur Kontrolle. Die zu vergleichenden Meßpunkte zeigen eine Standardabweichung von nur +- 0,37 %-TM von den Laborwerten.

Bei der beschriebenen Anordnung wurde ein Rechteck-Hohlleiter verwendet, einer der Flansche (64B) war mit einem inneren Gewindering 65 zur Halterung des Keramikrohrs 62 im Flansch 64B ausgerüstet. Es ist grundsätzlich jedoch genauso gut möglich, einen Rundhohlleiter einzusetzen, wobei dann die magnetische Grundwelle, die das Medium durchsetzt, die $H_{11}$-Welle ist.

**Patentansprüche**

1. Vorrichtung zur Bestimmung von Materialparametern, beispielsweise des Wassergehalts, an einem in einer im Bereich der Messung zumindest teilweise aus dielektrischem Material bestehenden Rohrleitung (10) geführten dielektrischen Medium, mit hinreichend geringen dielektrischen Verlusten, durch Mikrowellenmessungen, mit einem in Wechselwirkung mit dem Medium stehenden Mikrowellen-Sende/Empfangssystem, das einen Hohlleiter beinhaltet, der die Rohrleitung zumindest teilweise umschließt und dessen Signal ausgewertet wird, wobei die Rohrleitung den Hohlleiter durch gegenüberliegende Öffnungen (50A,50B) derart durchsetzt, daß die Längsachse (A-A') der Rohrleitung mit der Richtung des wechselwirkenden elektrischen Feldes der sich im Hohlleiter ausbildenden Mikrowelle übereinstimmt, dadurch gekennzeichnet, daß der Außendurchmesser (2R) der Rohrleitung (10) geringer ist als die senkrecht zur Rohrleitung (10) und senkrecht zur Längsachse (M-M') des Hohlleiters (50) gemessene lichte Breite (B) des Hohlleiters (50), wobei aber die Rohrleitung (10) den Querschnitt (Q) des Hohlleiters (50) nahezu vollständig ausfüllt und somit die Mikrowellen praktisch vollständig das Medium beaufschlagen, dessen Einfluß auf die meßbaren Eigenschaften der Mikrowellen durch Bestimmung von deren Dämpfung und/oder Phase ausgewertet wird, daß der Querschnitt des Hohlleiters (50) und der Modus der H-Welle so gewählt sind, daß die elektrische Feldstärke (E) zu den Rändern des Hohlleiters (50) im wesentlichen in dem gleichen Maße abnimmt wie die Schichtdicke des durchstrahlten Mediums, und daß die von den beiden Öffnungen (50A,50B) des Hohlleiters (50) verursachte Kapazität durch als Induktivität (L1,L2) wirkende, leitende Verbindungsstege zumindest näherungsweise kompensiert wird, die zwischen den beiden gegenüberliegenden Seiten des Hohlleiters (50) und parallel zur Längsachse (A-A') der Rohrleitung (10) ausgebildet sind.

2. Vorrichtung nach Anspruch 1, dadurch gekennzeichnet, daß mindestens zwei, vorzugsweise vier der als Induktivität wirkenden Verbindungsstege vorgesehen sind, die sich in unmittelbarer Nähe sowohl der Wandung der Rohrleitung (10), als auch an der parallel zur Längsachse (A-A') der Rohrleitung verlaufenden Seitenwandungen des Hohlleiters (50) befinden.

3. Vorrichtung nach Anspruch 1 und 2, dadurch gekennzeichnet, daß ein zwischen der Wandung der Rohrleitung (10) und den gegenüberliegenden Seitenwandungen des Hohlleiters (50) verbleibender Spalt (52) durch eine Absorberschicht (53) ausgefüllt ist.

4. Vorrichtung nach Anspruch 2, dadurch gekennzeichnet, daß zur Verbindung zwischen Hohlleiter (50) und Rohrleitung (10) Schraub- und/oder Bolzenelemente (20) vorgesehen sind, die durch die Verbindungsstege (51A...D) durchgeführt sind.

5. Vorrichtung nach Anspruch 1 oder 2, dadurch gekennzeichnet, daß die im Bereich der Rohrleitung (70), insbesondere zwischen der Wandung der Rohrleitung (70) und den gegenüberliegenden Seitenwandungen des Hohlleiters (50) angeordneten Induktivitäten als metallisches Blendenelement (66A,66B) aufgebaut sind, die außer der Funktion als kompensierende Induktivität auch die Funktion einer asymmetrischen Blende insoweit erfüllen, als die beidseitig der Rohrleitung (70) passierenden Mikrowellen einen unterschiedlichen Weg zurücklegen und sich somit auslöschen.

6. Vorrichtung nach Anspruch 5, dadurch gekennzeichnet, daß die metallischen Blendenelemente schalenförmig an der Rohrleitung (70) anliegen und die Asymmetrie durch einen unterschiedlichen Querschnitt der Blendelemente (66A,66B) erreicht wird.

## Claims

1. Apparatus for determining material parameters, for example the water content, using a dielectric medium which is guided in a conduit (10) formed at least partially from dielectric material in the region of the measurement, with sufficiently low dielectric losses, by microwave measurements, said apparatus having a microwave transmitting/receiving system, which interacts with the medium and includes a waveguide, which at least partially surrounds the conduit, and the signal of said waveguide being evaluated, the conduit traversing the waveguide through oppositely situated openings (50A,50B) in such a manner that the longitudinal axis (A-A') of the conduit coincides with the direction of the interconnecting electrical field of the microwave developing in the waveguide, characterised in that the external diameter (2R) of the conduit (10) is smaller than the inside width (B) of the waveguide (50), said width being measured perpendicularly relative to the conduit (10) and perpendicularly relative to the longitudinal axis (M-M') of the waveguide (50), but the conduit (10) almost completely filling the cross-section (Q) of the waveguide (50) and, in consequence, the microwaves practically completely filling the medium, the influence of which medium on the measurable properties of the microwaves being evaluated by determining their damping and/or phase, in that the cross-section of the waveguide (50) and the mode of the H-shaped wave are so selected that the electrical field intensity (E) decreases towards the edges of the waveguide (50) substantially to the same extent as the layer thickness of the irradiated medium, and in that the capacity, caused by the two openings (50A,50B) of the waveguide (50), is at least approximately compensated-for by conductive connecting webs, which act as inductivity (L1,L2), which webs are provided between the two oppositely situated sides of the waveguide (50) and parallel to the longitudinal axis (A-A') of the conduit (10).

2. Apparatus according to claim 1, characterised in that at least two, preferably four, of the connecting webs, which act as inductivity, are provided and are situated both in the immediate vicinity of the wall of the conduit (10) and on the lateral walls of the waveguide (50), which walls extend parallel to the longitudinal axis (A-A') of the conduit.

3.  Apparatus according to claims 1 and 2, characterised in that a gap (52), which remains between the wall of the conduit (10) and the oppositely situated lateral walls of the waveguide (50), is filled by an absorber layer (53).

4.  Apparatus according to claim 2, characterised in that screw and/or pin members (20) are provided for connection purposes between waveguide (50) and conduit (10) and extend through the connecting webs (51A...D).

5.  Apparatus according to claim 1 or 2, characterised in that the inductivities, which are disposed in the region of the conduit (70), more especially between the wall of the conduit (70) and the oppositely situated lateral walls of the waveguide (50), are constructed as a metallic diaphragm member (66A, 66B) and, in addition to fulfilling the function as a compensating inductivity, they also fulfil the function of an asymmetrical diaphragm insofar as the microwaves, which pass on both sides of the conduit (70), cover a different path and are thus extinguished.

6.  Apparatus according to claim 5, characterised in that the metallic diaphragm members abut in a dish-shaped manner against the conduit (70), and the asymmetry is achieved by a variable cross-section of the diaphragm members (66A,66B).


**Revendications**

1.  Dispositif pour la détermination de paramètres d'une matière, par exemple de la teneur en eau, sur un milieu diélectrique passant dans une conduite (10) constituée au moins partiellement de matière diélectrique dans la zone de mesure, ayant des pertes diélectriques suffisamment faibles, par des mesures en hyperfréquence, comportant un système émetteur-récepteur hyperfréquence en interaction avec le milieu, qui contient un guide d'ondes qui entoure au moins partiellement la conduite et dont le signal est évalué, la conduite traversant le guide d'ondes par des ouvertures opposées (50A, 50B) de façon telle que l'axe longitudinal (A-A') de la conduite concorde avec la direction du champ électrique interactif de l'onde hyperfréquence qui s'établit dans le guide d'ondes, caractérisé par le fait que le diamètre extérieur (2R) de la conduite (10) est inférieur à la largeur intérieure (B) du guide d'ondes (50) mesurée perpendiculairement à la conduite (10) et perpendiculairement à l'axe longitudinal (M-M') du guide d'ondes (50), mais que la conduite (10) remplit presque complètement la section (Q) du guide d'ondes (50) et, ainsi, les ondes hyperfréquences attaquent pratiquement complètement le milieu, dont l'influence sur les propriétés mesurables des ondes hyperfréquences est évaluée par détermination de l'affaiblissement et/ou de la phase de celles-ci, que la section du guide d'ondes (50) et le mode de l'onde TE sont choisis de façon que le champ électrique (E) diminue vers les bords du guide d'ondes (50) sensiblement dans la même mesure que l'épaisseur de couche du milieu traversé, et que la capacité produite par les deux ouvertures (50A, 50B) du guide d'ondes (50) est compensée au moins approximativement par des ponts de liaison conducteurs jouant le rôle d'inductance (L1, L2) faits entre les deux côtés opposés du guide d'ondes (50) et parallèlement à l'axe longitudinal (A-A') de la conduite (10).

2.  Dispositif selon la revendication 1, caractérisé par le fait qu'il est prévu au moins deux, de préférence quatre, ponts de liaison jouant le rôle d'inductance, lesquels se trouvent à proximité immédiate à la fois de la paroi de la conduite (10) et des parois latérales du guide d'ondes (50) parallèles à l'axe longitudinal (A-A') de la conduite.

3.  Dispositif selon les revendications 1 et 2, caractérisé par le fait qu'un interstice (52) restant entre la paroi de la conduite (10) et les parois latérales opposées du guide d'ondes (50) est rempli d'une couche de matière absorbante (53).

4.  Dispositif selon la revendication 2, caractérisé par le fait que pour la liaison entre le guide d'ondes (50) et la conduite (10) sont prévus des éléments à vis et/ou à boulons (20) qui traversent les ponts de liaison (51A à 51D).

5.  Dispositif selon l'une des revendications 1 et 2, caractérisé par le fait que les inductances placées dans la zone de la conduite (70), en particulier entre la paroi de la conduite (70) et les parois latérales opposées du guide d'ondes (50) sont constituées d'éléments écrans métalliques (66A, 66B) qui remplissent, outre la fonction d'inductance compensatrice, la fonction d'écran asymétrique, du fait que les ondes hyperfréquences passant des deux côtés de la conduite (10) parcourent un chemin différent et ainsi s'éteignent.

6.  Dispositif selon la revendication 5, caractérisé par le fait que les éléments écrans métalliques s'appuient en forme de coquille sur la conduite (70) et l'asymétrie est produite par une section différente des éléments écrans (66A, 66B).

A

10

D/φ ⟍100

HF_IN

M

60

E          50A

HF_OUT

FIG.1

1A          50

61

50B          Q

M'

A'

R₁     R₂

HF_IN          C          HF_OUT
L₁          L₂

1B

D

1C

x' x          f

φ

1D

x' x          f

50

60

$\lambda$

50A ← 54  $x = f(\lambda, \epsilon)$

61

50B

**FIG.2**

51A  53B

52B  51B

B

2R  54

M — 50A/B — M'

60

61

**FIG.3**

51C  53A  52A  51D

EP 0 564 879 B1

A

11A

13A

FIG.4

20

14A

12A

54

10A

(50A)

50

(50B)

14B

12B

13B

11B

A'

FIG.5

FIG.6

FIG.8

Laboranalyse  Anzeige  Micro-Moist

FIG.7